# EUROPEAN PATENT APPLICATION

(11) **EP 1 666 247 A1**
(43) Date of publication of application: **07.06.2006**
(21) Application number: 04106159.9
(22) Date of filing: 29.11.2004
(51) Int. Cl.: B32B 37/12, B32B 37/04, B32B 38/18, B32B 27/08, B32B 27/30, B32B 21/08, E04F 15/10

(54) **Method and apparatus for manufacturing laminate floor panels comprising at least a base layer and a top layer of plastics material, and such laminate floor panel**

(71) Applicant: Spanolux SA, 6690 Vielsalm (BE)
(72) Inventor: Nel, Willy, 8510 Marke (Kortrijk) (BE)
(74) Representative: Metman, Karel Johannes

(57) **Abstract**

The invention relates to a method of manufacturing laminate floor panels comprising at least a base layer and a top layer of plastics material. It includes providing a base layer panel and a top layer sheet. Then adhesive is applied to at least one of the base layer panel and the top layer sheet. The base layer panel and the top layer sheet are positioned one on top of the other and pressure is applied to the base layer panel and the top layer sheet such as to fix the top layer sheet on the base layer panel by means of the adhesive to form a laminate panel. The invention also comprises an apparatus for performing the method and a panel formed by the method.

## Description

The invention relates to a method of manufacturing laminate floor panels comprising at least a base layer and a top layer of plastics material, as well as to an apparatus for performing such method and a laminate floor panel obtained through this method.

Laminate floor panels are known in the art. The most widely used floor panels comprise a base layer panel of MDF/HDF and laminated on it a plurality of paper sheets soaked in resin. As an alternative there have been made proposals to use vinyl or another plastics material as a top layer, but such proposals have not led to a practical product.

The invention now provides a new method of manufacturing laminate floor panels comprising at least a base layer and a top layer of plastics material. This method according to the invention includes the steps of: providing a base layer panel, providing a top layer sheet, applying adhering means to at least one of the base layer panel and the top layer sheet, positioning the base layer panel and the top layer sheet one on top of the other, applying pressure to the base layer panel and the top layer sheet such as to fix the top layer sheet on the base layer panel by means of the adhering means to form a laminate panel.

The invention provides a very simple and reliable method of combining the base layer panel and the top layer sheet, which can lead to a high quality floor panel.

Preferably, the base layer panel is cleaned before its attachment to the top layer sheet in order to improve the adherence between the base layer panel and the top layer sheet. The adherence may further be improved if the base layer panel is moisturised and/or heated before its attachment to the top layer sheet. Glue is preferred as adhering means, in particular a hotmelt glue without plasticizer, such as polyurethane glue.

The base layer panel may be provided on its lower side with a moisture proof layer, either through coating a lower side with a moisture proof coating or by applying a moisture proof sheet. In the latter case, this sheet improves the appearance of the panel and can easily be printed, for example with information about the panel. The moisture proof sheet, i.e. a backing paper, may be attached to the base layer panel by gluing, for example by EVA glue.

In a preferred embodiment, the plastics material is supplied as a coiled web which is unwound, the web being supplied to the conveyor in order to be aligned with and contacted with a respective base layer panel after which the top layer sheet is cut-off from the web. In an alternative embodiment, the web is cut into sheets and the sheets are supplied to the conveyor in order to be aligned with a respective base layer panel. These embodiments allow a convenient and efficient way of supplying the top layer sheet to the base layer panels.

The invention includes also an apparatus for manufacturing laminate floor panels including at least a base layer panel and a top layer of plastics material. The apparatus comprises at least one of: an elongated conveyor for conveying articles from an input end to an output end, means for supplying base layer panels to the conveyor, means to provide the base layer panels with adhering means, such as glue, means for supporting and unwinding a wound coil of plastics web material, cutting means to cut the unwound web material into top layer sheets, and means to supply the top layer material to the conveyor, means for aligning each base layer panel with the top layer material, means for contacting the top layer material with a respective base layer panel, and pressure members to press the top layer sheet onto the base layer panel to form a laminate panel.

A laminate panel according to the invention comprises: a base layer panel, in particular an MDF/HDF board panel, a top layer sheet made from plastics material, in particular a vinyl-type plastics material, adhering means, in particular glue, with which the top layer sheet is fixed to the base layer panel, preferably a moisture proof bottom layer provided at the bottom of the base layer and comprising a coating and/or a sheet of moisture proof material.

The top layer sheet made from vinyl-type plastics material may be a sheet that is also used in floor cloths, for example comprising a glass membrane impregnated with vinyl material and an additional layer of vinyl material containing foaming agent. A relief may be provided in the top surface by chemical inhibition and/or by mechanical pressure. Other material is conceivable.

The invention will hereafter be elucidated with reference to drawing showing, in plan view, a scheme of an apparatus for manufacturing laminate floor panels.

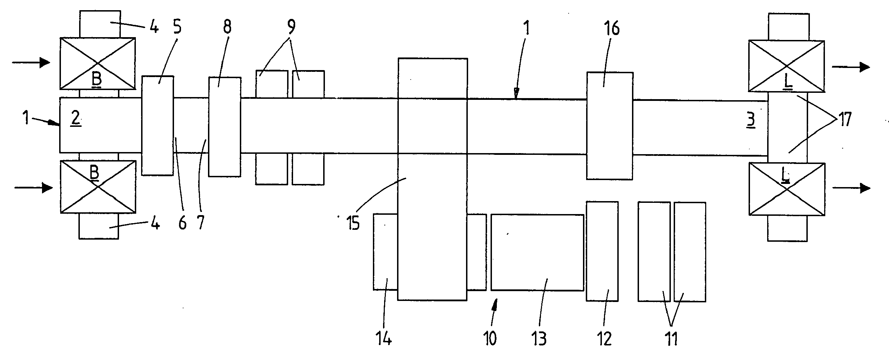

The drawing shows a scheme of an embodiment of a apparatus for manufacturing laminate floor panels including a base layer of preferably HDF/MDF material, a top layer of plastics material, in particular vinyl (PVC) and a bottom layer from moisture proof material, in this case kraft paper. As an example, the following measures may apply to the laminate floor panel:
Length of laminate panel: 2000-3000 mm
Width of laminate panel: 1500-2100 mm
Thickness of base layer panel: 6-12 mm
Thickness of the top layer sheet: 1-2 mm
The apparatus according to the embodiment includes an elongate conveyor 1, which may be a roller conveyor, belt conveyor or the like. This conveyor 1 has an input end 2 and an output end 3. The conveyor 1 being adapted to convey articles from the input end 2 to the output end 3 in a continuous or discontinuous manner.

At the input end 2, on both sides thereof, there is provided an unstacker 4 where a stack B of base layer panels may be positioned. The base layer panels may be taken away from the stacks one by one through a vacuum system by which the base layer panels may be positioned on the conveyor 1 at the input end thereof. By using two unstackers 4, a continuous operation for the apparatus is ensured. At the distance from the input end 2 there is provided a brush device 5 or other cleaning device which is adapted to clean the lower and/or upper side of the base layer panels in order to improve the further processing thereof. A suction device or similar apparatus may be provided to remove any foreign particles from the panels and the surroundings.

Downstream of the brush device 5 there is provided a heating device 6 and a moisturizing device 7. These devices are intended to prepare the base layer panel for receiving glue in a gluing station 8. Heating and moisturising the base layer panel will improve the adhering properties. The temperature of the base layer panels may for example be kept somewhere between 18-25° C, whereas the glue may for example be heated up to 100-150° C. Heating of the base layer panels may be done by IR heating, for example.

The gluing station 8 is adapted to apply glue on both the upper and lower sides of the base layer panel. In other embodiments it would be sufficient to apply glue on the upper side of the base layer panel only.

For adhering a vinyl (PVC) top layer to the MDF/HDF base layer panel, polyurethane hotmelt glue is preferred. This glue contains no plasticizer or softening agent which could migrate into the vinyl material and thereby ruin the bond between the material. The polyurethane glue plasticizes by heat and polymerises by the humid environmental air. There is already adherence upon application of the top layer but polymerisation will be complete after a few days. An example of a PU hotmelt glue is Purmelt QR 4663 from Henkel. The glue for the lower side of the base layer panel may be an EVA glue which is sufficient to adhere a bottom layer sheet (for example made of moisture proof backing paper (70 - 150 g/m², preferably 80 g/m²) to the base layer panel.

Reference numeral 9 denotes a bottom layer applying station. This station 9 include an unwinding system for unwinding a roller of web material for the bottom layer. It further includes a cutting device for cutting sheets out of the web. After unwinding and cutting, the bottom layer sheet is moved on a conveyor belt and vacuum drum to align it. The base layer panel is conveyed and is pressed on the vacuum drum through a driven roller, thereby adhering to the bottom layer sheet. A second roller of web material may provided so as to ensure the continuous operation of the apparatus.

As an alternative, the bottom layer applying station 9 could be replaced by a coating station which is adapted to apply a moisture proof coating on the bottom side of the base layer panel.

Next to the conveyor 1 there is provided a vinyl sheet preparation station 10. The station 10 includes an unwinding device 11 for unwinding the web of vinyl material from a roller, a cutting device 12 for cutting the web into top layer sheets, a buffer device 13 and a positioning device 14 for exactly positioning the vinyl sheets. A carrier 15, preferably equipped with a vacuum system, is adapted to take up a positioned top layer sheet and to transfer it to the conveyor 1 and bring it into alignment (for example on air cushions) with a prepared and positioned base layer panel. After alignment of the respective base layer panel and vinyl top layer sheet they are brought in contact with each other (for example by means of a vacuum box) so as to fix the top layer sheet onto the base layer panel. Due to the glue on the base layer panel, the top layer sheet will adhere to the base layer panel.

As an alternative, there is provided a second vinyl sheet preparation station. Here the sheet material is aligned and contacted with the base layer panel directly from the roller of web material and thus before it is cut-off by a cross cutter. Of course, it could also be cut-off just before it is applied to the base layer panel. The base layer panel is stationary during application of the top layer sheet, but it is also possible to move the base layer panel to apply the top layer sheet.

In order to properly fix the top layer sheet onto the base layer panel, the panel is conveyed to a roller press 16 comprising driven top and bottom rollers. The laminate panel including the base layer panel, the top layer sheet and possibly the bottom layer sheet is conveyed through the roller press 16 thereby tightly fixing the layers to the panel in order to form a laminate floor panel. As an alternative, it would be possible to use a short cycle press with heated top and bottom press plates pressing the stationary laminate panel.

At the output end 3 of the conveyor 1 there is provided a stacking device 17 in order to form one or two stacks of laminate panels L. These laminate floor panels are then ready for further processing, in particular for cutting or sawing these large panels into a plurality of smaller panels and processing the edges of these smaller panels so as to form coupling means for coupling the panels to each other when a floor is formed from the floor panels.

The invention is not limited to the embodiment shown in the drawing and described herein before. For example, other plastics materials may be used for the top layer sheets, or even cork is conceivable. Also the base layer panel may be made from different material, such as wood, plastics or other material. Further layers may be provided in the laminate panel. The laminate panels may also have other uses, such as wall panels or panels for covering other surfaces.

The apparatus may comprise more than one conveyor of different type and shape. The panels or layers may be supplied to the conveyor in other positions. The layers may be formed elsewhere so that not a roll of web material but rather a stack of layers or sheets is supplied to the site where the floor panels are formed. The means for aligning and positioning sheets or panels may include markers on the sheets or panels, such as visual signs or reference edges, which may co-operate with means such as camera's, sensors, mechanical stops etc provided in the apparatus.

## Claims

1. Method of manufacturing laminate floor panels comprising at least a base layer and a top layer of plastics material, including the steps of:
providing a base layer panel,
providing a top layer sheet,
applying adhering means to at least one of the base layer panel and the top layer sheet,
positioning the base layer panel and the top layer sheet one on top of the other,
applying pressure to the base layer panel and the top layer sheet such as to fix the top layer sheet on the base layer panel by means of the adhering means to form a laminate panel.

2. Method according to claim 1, wherein the base layer panel is supplied to an input end of an elongated conveyor (1) having input and output ends (2, 3), whereas the top layer sheet is supplied to the conveyor (1) at a position between the input and output ends (2, 3).

3. Method according to claim , wherein the base layer panel is cleaned before its attachment to the top layer sheet.

4. Method according to one of the preceding claims, wherein the base layer panel is moisturized and/or heated before its attachment to the top layer sheet.

5. Method according to one of the preceding claims, wherein the base layer panel is provided on its lower side with a moisture proof layer, either through coating the lower side with a moisture proof coating or by applying a moisture proof layer.

6. Method according to one of the preceding claims, wherein the plastics material is supplied as a coiled web which is unwound, the web being supplied to the conveyor in order to be aligned with and contacted with a respective base layer panel after which the top layer sheet is cut-off from the web.

7. Method according to one of claims 1 - 5, wherein the plastics material is supplied as a coiled web which is unwound, the web being cut into sheets and the sheets are supplied to the conveyor in order to be aligned with a respective base layer panel.

8. Method according to claim 7, wherein the base layer panel and the respective top layer sheet are aligned by aligning means before being contacted.

9. Method according to one of the preceding claims, wherein at least the attached base layer panel and top layer sheet are pressed onto each other by means of a roller press (16) through which the laminate panel is fed.

10. Method according to one of the preceding claims wherein the laminate panel is further processed, in particular is cut into smaller panels and /or the edges of the panels are processed in order to form coupling means to couple panels to each other to form a floor.

11. Method according to one of the preceding claims, wherein glue is used as adhering means.

12. Apparatus for manufacturing laminate floor panels including at least a base layer and a top layer of plastics material, said apparatus comprising at least one of the following:
an elongated conveyor (1) for conveying articles from an input end (2) to an output end (3),
means (4) for supplying base layer panels to the conveyor,
means (8) to provide the base layer panels with adhering means, such as glue,
means (11) for supporting and unwinding a wound coil of plastics web material, cutting means (12) to cut the unwound web material into top layer sheets, and means to supply the top layer material,
means (15) for aligning each base layer panel with the top layer material,
means for contacting the top layer material with a respective base layer panel, and
pressure members (16) to press the top layer sheet onto the base layer panel to form a laminate panel.

13. Apparatus according to claim 11, wherein the cutting means (12) are arranged to cut the unwound web material into top layer sheets and are combined with means for supplying the cut top layer sheets to the conveyor (1) and with means (15) for aligning each top layer sheet with a corresponding base layer panel,

14. Apparatus according to claim 11, wherein the cutting means is a cross cutter arranged to cut a top layer sheet from the web after it has been brought into contact with the base layer panel.

15. Laminate panel, comprising:
a base layer panel, in particular an MDF/HDF board panel,
a top layer panel made from plastics material, in particular a vinyl-type plastics material,
adhering means, in particular glue, with which the top layer sheet is fixed to the base layer panel,
preferably a moisture proof bottom layer provided at the bottom of the base layer and comprising a coating and/or a sheet of moisture proof material.
